# EUROPÄISCHE PATENTSCHRIFT

(11) **EP 4 353 115 B1**
(45) Veröffentlichungstag und Bekanntmachung des Hinweises auf die Patenterteilung: **06.11.2024**
(21) Anmeldenummer: 22200575.3
(22) Anmeldetag: 10.10.2022
(51) Int. Cl.: A43B 17/00, B29D 35/14

(54) **ORTHOPÄDISCHER PUR-SCHAUMKUNSTSTOFF-SCHUHEINLEGESOHLENROHLING**
ORTHOPAEDIC PUR FOAM PLASTIC SHOE INSOLE BLANK
ÉBAUCHE ORTHOPÉDIQUE DE SEMELLE INTÉRIEURE DE CHAUSSURE EN MOUSSE PUR

(43) Veröffentlichungstag der Anmeldung: 17.04.2024
(73) Patentinhaber: Spannrit GmbH, 63801 Kleinostheim (DE)
(72) Erfinder: KATZER, Roland, 63801 Kleinostheim (DE)
(74) Vertreter: Kuhnen & Wacker Patent- und Rechtsanwaltsbüro PartG mbB

(56) Entgegenhaltungen:
- EP-A1- 3 708 018
- EP-A1- 3 981 279
- DE-A1- 102018 206 906

## Beschreibung

Die vorliegende Erfindung betrifft einen orthopädischen-Schaumkunststoff-Schuheinlegesohlenrohling mit einem drei-dimensional im RIM-Verfahren geformten PUR-Stützkörper, auf dem oberseitig zumindest ein Polsterkörper angeordnet ist. Auf der Oberseite des PUR-Stützkörpers ist weiter ein orthopädisch wirksames Fußbett ausgebildet. Die Unterseite des PUR-Stützkörpers ist der Schuhsohle zugewandt.

Die vorliegende Erfindung betrifft auch ein Verfahren zur Herstellung eines solchen Schuheinlegesohlenrohlings.

Aus dem Stand der Technik sind im RIM-Verfahren hergestellte orthopädische PUR-Schaumkunststoff-Schuheinlegesohlenrohlinge bekannt, die einen PUR-Grundkörper oder Stützkörpers aufweisen. Die Aufgabe des Grund- bzw. Stützkörpers liegt darin den Fuß anatomisch und orthopädisch wirksam zu stützen bzw. zu führen. Hierzu ist der Grund- bzw. Stützkörper aus einem nachgiebigen, jedoch relativ festen PUR-Schaumkunststoff gebildet, der neben einer orthopädischen Stützwirkung auch eine biometrische Dämpfungswirkung bspw. bei Laufen erfüllen muss, damit abrupte Lastwechseln nicht hart auf das Fußskelett übertragen werden. Zum weiteren Abdämpfen der Fußbewegungen auf der Einlegesohle und zum Aus- bzw. Angleichen der Fußsohle bzw. Abmildern von Druckspitzen auf insbesondere empfindliche Bereiche der Fußsohle ist ein Polsterkörper vorgesehen, der im Vergleich zum PUR-Stützkörpers weicher ist und sich somit besser an die Fußsohle anschmiegen kann. Je besser das Zusammenspiel von Stützkörper und Polsterkörper bzw. Einlegesohlen-Bezugstoff gelingt, desto besser können orthopädische Vorgaben umgesetzt werden.

PUR-Grundkörper oder Stützkörper werden häufig in Form einer Schuheinlegesohle mittels Aufschäumen eines Polyols mit einem Isocyanat einer RIM-Schäumform geformt. Dabei werden die beiden reaktiven Ausgangskomponenten - das Polyol und das Isocyanat - in eine offene meist zweiteilige Form gegeben, deren Kavität eine Schuhsohlenform zeigt. Solche RIM-Schäumformen sind hinlänglich bekannt und werden bei der Herstellung orthopädischer Schuheinlegesohlenrohlinge verwendet. Allerdings weist ein solcher im RIM-Schäumverfahren erzeugter PUR-Grundkörper oder PUR-Stützkörper, insbesondere wenn er mit nur einer Materialhärte hergestellt wurde, einen nicht über alle Fußsohlenbereiche optimale orthopädische Wirkung oder einen optimalen Tragekomfort auf Weiterhin ist das Erscheinungsbild eines solchen RIM-Rohlings nicht immer ansprechend, was jedoch durch Beziehen des Stützkörpers mit einem Polster- oder Deckenmaterial verbessert werden kann.

Schuheinlegesohlenrohlinge des Standes der Technik sind beispielsweise in den Dokumenten DE 102018206906 A, EP 3981279 A, EP 3708018 A beschrieben.

Da an orthopädische Schuheinlegesohlenrohlinge, insbesondere in den verschiedenen Fußsohlenbereichen, unterschiedliche Anforderungen hinsichtlich Stützwirkung und Dämpfungseigenschaft gestellt werden, können orthopädische Schuheinlegesohlenrohlinge im Allgemeinen nicht mit nur einem Material / einer Materialhärte ausgeführt werden. Werden beispielsweise verschiedene RIM-Schäume verwendet, kommt es in den Übergangsbereichen der Schäume zu undefinierten, schlecht vorhersagbaren Stütz- und Dämpfungseigenschaften, je nachdem, wie die Schäume während des Aufschäumens ineinanderfließen. Dies und die Ausbildung der Materialfronten ist bedingt durch die Schaumerzeugung, welche Materialfronten prozessstabil nicht exakt so reproduzierbar sind, dass genaue Fußsohlenbereichsgrenzen einhaltbar sind. Daher werden die PUR-Stützkörper mit Polsterkörper und weiteren Decken- und Bezugsmaterialien oder orthopädischen Komponenten versehen, welche die gewünschten orthopädischen Stütz- und Dämpfungseigenschaften verbessern.

So werden einzelne Fußsohlenbereiche eines Stützkörpers, wie etwa der Vorderfußbereich oder der Fersenbereich oftmals mit Aussparungen ausgebildet, um darin Dämpfungsmaterialien einzubringen, um bspw. das Fersenbein in vertikaler Richtung dämpfend und weich zu lagern, jedoch gleichzeitig die Ferse in den horizontalen Richtungen stabil zu halten und zu führen. Oder es werden Verstärkungen in den Längsgewölbebereich ein- oder aufgebracht, um die orthopädische Schuheinlegesohlenrohlinge in den jeweiligen Bereichen orthopädisch wirksam zu verstärken. Gleichzeitig wird in diesen Bereichen mithilfe eines Deckenmaterials versucht die gewünschten Tragekomforteigenschaften zu optimieren. Hierbei ist der Zielkonflikt zwischen Steifigkeit und Weichheit zu erreichen, ohne dass dabei Kanten oder Versteifungen entstehen, die den Tragekomfort verringern oder wodurch die orthopädische Wirkung reduziert wird.

Um die orthopädische Wirkung und gleichzeitig den gewünschten Tragekomfort zu erreichen und auch noch das Erscheinungsbild zu verbessern, werden PUR-Stützkörper oftmals mit einem Polsterkörper bzw. Deckenmaterial versehen/bezogen, welcher/s die gewünschten Eigenschaften hinsichtlich Dämpfung, Tragekomfort und Erscheinungsbild aufweist. Jedoch haben die verwendeten Polster-/ Deckenmaterialien meist einen negativen Einfluss auf die orthopädische Wirkung des PUR-Stützkörpers und umgekehrt. Dies liegt daran, dass die im Stand der Technik herkömmlich eingesetzten Polster- und Deckenmaterialien eine meist textile Trägerschicht oder eine haftvermittelnde Trägerschicht aufweisen, um das Polster- und/oder Deckenmaterial mit dem PUR-SchaumkunststoffMaterial des Stützkörpers verbindbar zu machen und/oder das Polster- und/oder Deckenmaterial stabil und abriebfest zu halten.

Diese Trägerschichten oder Haftvermittler-Schichten beeinflussen die immanenten Eigenschaften der einzelnen Bestandteile einer Schuheinlegesohle jedoch nicht nur in der Kontaktfläche zwischen Stützkörper und Polstermaterial bzw. Deckenmaterial, sondern verfälschen auch die Kraftübertragung des Fußes auf die Sohle bzw. Verändern den gewollten Dämpfungseffekt. Dies liegt an der Wechselwirkung zwischen den Trägerund/oder Haftvermittlerschichten des Polsterkörpers/Deckenmaterials und dem orthopädisch wirksamen Stützkörpers aus PUR-Schaumkunststoff. So ist beispielsweise eine textile Trägerschicht in Sohlenbereichen nachteilig, in denen eine gute Dämpfung erzielt werden soll, da die immanente Eigenschaft von Textilien, in Längsrichtung der Fäden also in der Textilebene zugsteif zu sein, die Dämpfung zumindest in dieser Richtung vermindert. Dadurch kann sich die gewünschte Stütz- und Dämpfungseigenschaft eines darunterliegenden PUR- Stützkörpers oder Polsterkörpers nicht voll entfalten, da durch die Textilschicht beispielsweise ein Einsinken des Fußes, z.B. des Fersenbeins, in die Dämpfungsschicht verhindert wird. Ein Ähnliches gilt für den Bereich der Zehengrundgelenke, in dem regelmäßig eine gute Dämpfung erzielt werden soll. Wenn allerdings die Trägeroder Haftvermittlerschicht in einer Richtung zugsteif oder gar zugstarr ist, reduziert sich auch die Polster- und/oder Dämpfungseigenschaften des mittels der Träger- oder Haftvermittlerschicht aufgebrachten Polstermaterials.

Andererseits können elastische Haftvermittlerschichten in Bereichen, wie zum Beispiel dem Längsgewölbebereich, eine feste Verbindung zwischen den Decken- / Bezugsmaterialien, den Posterkörpern und/oder orthopädischen Einlegeteilen mit dem Stützkörper verschlechtern, da sie die Steifigkeit in diesem Bereich herabsetzen. Somit stellt die Kombination aus Stützkörper mit aufgebrachten Polster- bzw. Deckenmaterialien mit Trägerschichten oder Haftvermittlerschichten immer einen nicht optimalen Kompromiss dar.

Eine weitere Herausforderung an die Polster- und Deckenmaterialien besteht in deren Abriebfestigkeit, d.h. bei gleichzeitiger guter Dämpfungseigenschaft und Tragekomfort soll eine hohe Abriebfestigkeit erreicht werden. Diese konträr zueinander verlaufenden Eigenschaften zwischen Abriebfestigkeit und guter Dämpfungseigenschaft führen häufig zu mehrschichtig aufgebauten Decken oder Kompositmaterialien, welche immer lediglich einen Kompromiss der gewünschten Eigenschaften darstellen. So ist entweder die dem Fuß zugewandte Oberfläche abriebfest und hat aber dann zu geringe Dämpfungseigenschaften oder umgekehrt. Daher gehen hohe Dämpfungseigenschaften oftmals mit einer geringen Abriebfestigkeit einher.

Eine weitere Herausforderung an die Polster- und Deckenmaterialien stellt deren Verbindbarkeit mit dem PUR-Material des Stützkörpers dar. Textile Materialien, wie zum Beispiel Vliese o.ä. werden während des Schäumvorganges von dem noch nicht ausgehärteten PUR-Material durchsetzt und bilden nach dem Aushärten eine mehr oder weniger harte Zwischenschicht. Dadurch wird die Flexibilität als auch die Elastizität- und Dämpfungseigenschaften des für den Stützkörpers eingesetzten PUR-Schaumkunststoffs als auch der verwendeten Polster-bzw. Deckenmaterialen in der Grenzschicht zwischen Deckenmaterial und dem PUR-Schaumkunststoff zumindest an der Oberseite des PUR-Stützkörpers bzw. an der Unterseite des Polsterkörpers beeinträchtigt. Zudem wird eine Druckbelastung oder Kraftweiterleitung des Fußes auf die Schuheinlegesohlen nur indirekt und verfälscht weitergeleitet, bis zu dem Punkt, dass eine punktuelle Dämpfung bspw. im Vorderfußbereich nahezu unmöglich gemacht wird, insbesondere im Bereich der Zehengrundgelenke.

Es ist daher eine Aufgabe der Erfindung einen Schaumkunststoff-Schuheinlegesohlenrohling bereitzustellen, dessen Stützkörper im RIM- Schäumverfahren hergestellt wird und der auf seiner dem Fuß zugewandten Oberseite und/oder Unterseite zumindest einen Polsterkörper oder ein Deckenmaterial aufweist, der/das die Stützeigenschaften des Stützkörpers nicht negativ beeinflusst und die Dämpfungseigenschaften des Stützkörpers verbessert. Der Polsterkörper soll zudem abriebfest sein und die erforderliche Nachgiebigkeit aufweisen, damit auch punktuelle Druckbelastungen auf den Stützkörper des Schuheinlegesohlenrohlings zuverlässig weitergeleitet werden können. Weiterhin soll ein Schuheinlegesohlenrohling bereitgestellt werden, der in der Herstellung kostengünstig ist, wobei insbesondere die Erstellung des PUR-Stützkörpers und die Verbindung zwischen Stützkörpers dem zumindest einen Polsterkörper /Deckenmaterial nicht in separaten Verfahrensschritten erfolgt.

Die erfindungsgemäße Aufgabe wird mit einem orthopädischen PUR-Schaumkunststoff-Schuheinlegesohlenrohling gemäß Anspruch 1 gelöst, wobei bevorzugte Ausführungsformen in den sich daran anschließenden Unteransprüchen angegeben sind. Die erfindungsgemäße Aufgabe wird ferner mit einem Verfahren zum Herstellen eines orthopädischen PUR-Schaumkunststoff-Schuheinlegesohlenrohlings gemäß Anspruch 12 gelöst, wobei bevorzugte Ausführungsformen des erfindungsgemäßen Verfahrens in den sich daran anschließenden Unteransprüchen angegeben sind.

Der erfindungsgemäße orthopädische PUR-Schaumkunststoff Schuheinlegesohlenrohling weist einen dreidimensional im RIM-Verfahren geformten, den Fuß stützenden, PUR-Stützkörper auf. Der PUR-Stützkörper hat eine schuhseitige Unterseite und eine fußseitige Oberseite, auf der ein anatomisch geformtes, orthopädisch wirksames Fußbett ausgebildet ist. Auf der fußseitigen Oberseite und/oder Unterseite des PUR-Stützkörpers ist zumindest ein Polsterkörper angeordnet, der während des reaktiven PUR-Schäumens des Stützkörper an diesen angeschäumt wird. Im Weiteren dieser Erfindungsbeschreibung sollen unter den Begriff Polsterkörper auch Decken- und Bezugsmaterialien verstanden werden, da diese je nach Materialstärke ein mehr oder weniger starken Polstereffekt erzielen, neben der optischen Verbesserung des Erscheinungsbildes des Schuheinlegesohlenrohlings. Die Begriffe Polsterkörper, Bezugsstoff und Deckenmaterial sollen daher eher synonym und gegeneinander austauschbar verstanden werden, je nach Anforderung an die Polster-, Tragekomfort und/oder Dekoreigenschaft des PU-Flächenmaterials.

Im weiteren Verlauf der Erfindungsbeschreibung wird der erfindungsgemäße Schuheinlegesohlenrohling auch verkürzt nur als Schuheinlage bezeichnet, was daran liegt, dass ein aus der RIM-Schäumform entnommener Schuheinlegesohlenrohling nach einem geeigneten Zuschnitt auch direkt in einen Schuh eingelegt werden kann und dort beispielsweise ein fehlendes Fußbett ersetzt. In den meisten Fällen ist der erfindungsgemäße Schuheinlegesohlenrohling jedoch vorgesehen, von einem Orthopädie-Fachmann, wie einem Schuhorthopäden weiterbearbeitet zu werden, um an den Fuß des Träger des Schuhs und auch an den Schuh selbst angepasst zu werden, insbesondere individuell angepasst zu werden. Da die mit der Erfindung erzielte Verbesserung des Standes der Technik sowohl für den Schuheinlegesohlenrohling als auch für die Schuheinlage gilt, werden diese Begriffe der Einfachheit halber auch synonym verwendet.

Das Material für den erfindungsgemäß verwendeten Polsterkörper, was auch als Bezugsmaterial bzw. Deckenmaterial bezeichnet werden kann, wenn dessen Materialstärke eher gering ist, ist ein im Wesentlichen zweidimensionales PU-Flächenmaterial, das ohne eine Trägerschicht aus einem Polyurethan-Ausgangsmaterial im Koagulationsverfahren, im Extrusionsverfahren oder aus einer Dispersionsmischung erzeugt wurde. Das erfindungsgemäß verwendete PU-Flächenmaterial weist keine Trägerschicht auf, insbesondere kein als Träger dienendes Textil. Das erfindungsgemäß verwendete PU-Flächenmaterial wird in Fachkreisen oftmals als textil-freies Kunstleder auf Polyurethan (PU) Basis bezeichnet.

Das erfindungsgemäße PU-Flächenmaterial zeichnet sich gegenständlich dadurch aus, dass die Längen- und Breitenabmessungen gegenüber der Dicke des Materials deutlich größer sind. Dabei ist es nicht zwingend erforderlich, dass die Dicke des Materials über die Breite und/oder Länge konstant ist, auch wenn dies in den meisten Fällen die bevorzugte Ausführungsform ist. Mit der Bezeichnung Flächenmaterial soll auch ausgedrückt werden, dass der Polsterkörper oder der Bezugsstoff oder das Deckenmaterial in seinen Flächenabmessungen nicht den Längen- und Breitenabmessungen des Schuheinlegesohlenrohling entsprechen muss, sondern in seiner Flächenausdehnung sowohl wesentlich größer als auch kleiner sein kann. In Dickenrichtung kann das PU-Flächenmaterial sowohl folienartig dünn sein oder beispielsweise zur Erfüllung der Eigenschaft als Polsterkörper einige Millimeter oder Zentimeter dick sein.

Insbesondere ist vorgesehen, dass das PU-Flächenmaterial als Platten-, Band-, Endlos- oder Rollenware beim Hersteller der erfindungsgemäßen Schuheinlegesohlenrohlings angeliefert und zum Einsatz kommt, und erst vor dem Einlegen in eine RIM-Schäumform geeignet abgelängt bzw. zugeschnitten wird, d.h. Schuheinlegesohlen-rohling-spezifisch zum Einlegen in eine Schäumform vorbereitet wird.

Im Unterschied zum PUR-Schaumkunststoff des PUR-Stützkörpers, der im sogenannten Reaktions-Schäumverfahren erzeugt wird, d.h. bei dem der Polyurethan-Schaumkunststoff durch Zusammenbringen eines reaktionsfähigen Polyols mit einem reaktionsfähigen Isocyanats in einer RIM-Schäumform gebildet und in Form gebracht wird, wird das erfindungsgemäß verwendete Bezugs- oder Polstermaterial (=PU-Flächenmaterial) aus einem ausreagierten in flüssiger oder fester Form vorliegenden Polyurethan (PU) durch Koagulation, Dispersion mit anschließender Trocknung oder im Extrusionsverfahren zu einem textilfreien PU-Kunstleder verarbeitet, welches keine Trägerschicht, insbesondere keine textile Trägerschicht aufweist.

Ein derartig erzeugtes PU-Flächenmaterial kann in einem RIM-Schäumverfahren direkt mit dem in der RIM-Schäumform erzeugten PUR-Schaumkunststoff angeschäumt und festgesetzt werden, da die beiden Polyurethan-Materialien beim Aushärten des PUR-Schaumkunststoffes stoffschlüssig miteinander verkleben, ohne dass sich eine versteifte oder ausgehärtete Grenzschicht bildet. Eine solche entsteht, wenn eine Trägerschicht am Flächenmaterial, insbesondere textile Trägerschicht angeordnet ist, da diese vor dem Aushärten des reaktiv erzeugten PUR-Schaumkunststoffs in der RIM-Schäumform vom noch weichen PUR-Schaumkunststoff durchsetzt wird und so ein durch die Trägerschicht verstärkter PUR-Schaumkunststoff in der Grenzschicht zwischen Stützkörper und Polsterkörper entsteht. In und im Bereich der Grenzschicht weist dann sowohl der Stützkörper als auch der Polsterkörper noch eine (stark) reduzierte elastische Eigenschaften auf, was nicht die orthopädische Wirkung der Schuheinlage, sondern auch den Tragekomfort (stark) negativ beeinflusst. Durch die Vernetzung/Versteifung der Grenzschicht können beispielsweise punktuelle Belastungen auf den Stützkörper nicht mehr punktuell unterstützt werden, sondern werden flächig verteilt, was zu einem insgesamt härteren, weniger weichen Stützgefühl bzw. Dämpfung führt, obwohl die Härte des eingesetzten PUR-Schaumkunststoffes unverändert bleibt.

Selbst wenn Urethan nicht das Monomer von Polyurethan ist, entsteht bei der Verbindung dieser beiden PU-Materialien keine versteifte oder verhärtete Grenzschicht, weil die beiden PU-Materialien Urethan als funktionale Gruppe aufweisen. Die Eigenschaften der beiden PU-Materialien bleiben somit auch in und im Bereich der Kontaktfläche der beide Sohlenkörper weitestgehend erhalten, wodurch in Dickenrichtung der Schuheinlage ein weicher, insbesondere stufenloser Übergang der Materialeigenschaften des Stützkörpers auf die Materialeigenschaften des Polsterkörpers stattfindet. Dies stellt einen besonders angenehmen Tragekomfort bereit, ohne dass hierbei die Stützeigenschaften PUR-Schaumkunststoffs des Stützkörpers oder die Polstereigenschaften des PU-Bezugstoffes (Polsterkörper) darunter leiden. Insgesamt kann somit eine Krafteinleitung auf die Schuheinlage kontinuierlich ohne versteifte Grenzschichten weitergeleitet und gedämpft werden. Dadurch ist die Belastungsweiterleitung, die Stütz- und Polsterfunktion der Schuheinlage gleichmäßiger und besser berechen- und vorhersagbar, wodurch der erfindungsgemäße Schuheinlegesohlenrohling und damit auch die daraus gefertigte Schuheinlage genauer und besser auf die Bedürfnisse des Träger der Schuheinlage eingestellt werden kann.

Darüber hinaus sind orthopädische Schuheinlegesohlenrohlinge individuell an den Fuß bzw. an die Fußsohle des Trägers der Schuheinlage anpassbar. Dies wird üblicherweise dadurch erreicht, dass die eingesetzten Materialien - sei es für den Stützkörper als auch für den Polsterkörper - zumindest schleifbar sind, wenn nicht gar fräsbar. Wenn nun ein Polsterkörper gemäß dem Stand der Technik mit einer textilen Trägerschicht zum individuellen Anpassen durch einen Orthopädieschuhmacher gefräst und/oder verschliffen wird, ist es unumgänglich, dass die geschliffenen Bereiche ein ausgefranztes Erscheinungsbild zeigen. Ein solch unschönes Aussehen einer geschliffenen Schuheinlage wird durch die erfindungsgemäße Verwendung eines textilfreien PU-Flächenmaterials vermieden, da keine freigeschliffenen Fäden mehr von der Schuheinlage hervorstehen können. Somit zeigt auch ein (individuell) angepasster und bearbeiteter erfindungsgemäßer Schuheinlegesohlenrohling ein ansprechendereres Erscheinungsbild, als herkömmlich aus dem Stand der Technik bekannte Schuheinlegesohlenrohlinge.

Erfindungsgemäß ist es nicht zwingend, dass das Bezugsmaterial bzw. der Polsterkörper aus Polyurethan (PU) Flächenmaterial besteht, jedoch sind dem Erfinder keine weiteren geeigneten Bezugs- oder Polstermaterialien bekannt, die sich ohne eine Trägerschicht mit reaktionsgeschäumtem Polyurethan (im Weiteren PUR) so verbinden lassen, dass keine versteifte oder ausgehärtete Grenzschicht beim Auf- und Anschäumen des PUR in der RIM-Schäumform oder nach Aushärten des PUR-Schaumkunststoffs entsteht.

Ferner ist bei der Materialauswahl darauf zu achten, dass nur Materialien verwendet werden können, die von den Gesundheitsbehörden in den einzelnen Ländern als gesundheitlich unbedenklich eingestuft und daher im Gesundheitswesen zugelassen sind. So ist beispielsweise Polyvinylchlorid (PVC) in Deutschland für Schuheinlagen nicht zugelassen, obwohl mit PVC ebenfalls Kunstleder erzeugt werden können. Die Erfindungsbeschreibung erfolgt daher auf Basis von PU-Kunstleder als bevorzugtes Material. Die Erfindung kann jedoch sinngemäß auch auf PVC-Kunstleder angewendet werden, sollte PVC eines Tages für die Verwendung in Schuheinlagen zugelassen werden. Sollte in anderen Ländern außerhalb Deutschlands PVC als Bezugsstoff für orthopädisch wirksame Schuheinlage zugelassen sein, so soll in diesen Länder unter dem erfindungsgemäßen Begriff PU-Flächenmaterial auch ein PVC-Kunstleder ohne Trägerschicht verstanden werden.

Wie für den Fachmann leicht ersichtlich, kann ein Trägerschicht-loses PU-Flächenmaterial dünner ausgeführt werden als ein Bezugsstoff mit (textiler) Trägerschicht. Dieser Effekt verstärkt sich insbesondere dann, wenn an das Bezugsmaterial ein an den Fuß anschmiegsamer Polsterkörper ausgebildet sein soll, da dann eine versteifende Trägerschicht einen möglich großen Abstand zur Fußsohle aufweisen sollte, um ein Anschmiegen des Polsterkörpers zu gewährleisten. Erfindungsgemäß entfällt eine solche versteifte Trägerschicht, wodurch eine dünnere Ausgestaltung des Polsterkörpers möglich ist. Dieser Effekt wird durch die Nachgiebigkeit des PUR-Stützkörpers weiter erhöht, da dieser nun kein starres Gegenlager mehr bildet, wie etwa eine verhärtete Grenz- oder Zwischenschicht. Dies ist beispielsweise für Schuheinlagen für Diabetiker bevorzugt, da dort Materialhärtenübergänge mit dünneren Polsterkörpern abgedämpft werden können und so die Einlegesohlen insgesamt dünner gefertigt werden können. Aber auch für Straßen-, Sport-, Freizeit- und/oder Arbeitsschuhe sind dünnere Einlegesohle bevorzugt, insbesondere dann, wenn die Innensohle solcher Schuhe nicht austauschbar sind und die Einlegesohle zusätzlich in die Schuhe eingelegt wird. So wird beispielsweise verhindert, dass durch die zusätzliche Sohle der Fersenhalt durch den Schuh verloren geht.

Die erfindungsgemäße Verwendung von Bezugsmaterialien bzw. Polsterkörper ohne Trägerschicht ist weiterhin für Schuheinlegesohlen bevorzugt, deren Stützkörper mit Ausnehmungen vorgesehen sind, die beispielsweise im Fersenbereich oder im Vorderfußbereich angeordnet und in die weiche Dämpfungsmaterialien eingebracht sind. Hier kann mit erfindungsgemäß verwendeten Bezugsmaterial ohne Trägerschicht sowohl das PUR-Schaumkunststoffmaterial des Stützkörpers als auch das in den Ausnehmungen eingebrachte Dämpfungsmaterial seine Funktion über die komplette Materialstärke erfüllen und wird nicht durch eine orthopädisch hinderliche harte Grenzschicht gehemmt. Folglich kann auch der Stützkörper mit darin aufgenommenen Polsterkörpern in Dickenrichtung der Einlegesohle dünner ausgestaltet werden, da eine versteifende Grenzschicht gänzlich wegfällt. Über das Trägerschicht-lose PU-Flächenmaterial als Bezug oder Polstermaterial für eine erfindungsgemäße Schuheinlegesohle können Belastungen auf den Fuß als auch Kraftübertragungen vom Fuß auf die Sohle direkt durch die orthopädisch wirksamen Materialien übertragen werden und werden nicht durch eine versteifte Grenzschicht verfälscht.

Dabei kann der Polsterkörper bzw. das Bezugsmaterial die Oberseite und/oder Unterseite des Schuheinlegesohlenrohlings nur teilweise oder auch vollständig bedecken. Aufgrund der leichten Verbindbarkeit der beiden PU-Materialien ergeben sich große Gestaltungsfreiheiten insbesondere hinsichtlich der Anordnung von Polster- und Stützbereichen. So kann erfindungsgemäß der Polsterkörper eine vollständige Schuhsohlenform zeigen, wobei gleichzeitig der Stützkörper nur in orthopädisch wirksamen Stützbereichen ausgebildet ist. Ein Fachmann erkennt hier auch die umgekehrte Ausführungsmöglichkeit, dass Polsterkörper nur in den Bereichen ausgebildet sind, in denen eine Polsterung der Fußsohle erforderlich ist.

Damit sind auch Ausgestaltungen möglich, in denen mehrere Polsterkörper und Bezugsmaterialien verwendet werden, die entweder beide aus PU-Flächenmaterial gemäß der Erfindung bestehen, wobei beispielsweise die Polsterkörper durch Ausnehmungen in den Bezugsmaterialien hindurch tauchen, oder die Polsterkörper mittels der Bezugsmaterialien auf dem Stützkörper festgesetzt werden. Dies kann beispielsweise in Art einer Sandwichbauweise erfolgen, wobei der Stützkörper den Polsterkörper gegenüber dem Bezugsmaterial fixiert und vice versa. Somit können die Polsterkörper vollständig durch das Bezugsmaterial überdeckt sein oder auch nur teilweise, wobei sowohl der Polsterkörper als auch der Stützkörper durch die Ausnehmung im Bezugsmaterial hindurch tauchen und/oder sichtbar sein können.

Erfindungsgemäß wird der Schuheinlegesohlenrohling mit Hilfe des RIM-Schäumverfahrens hergestellt. Dabei wird erfindungsgemäß eine RIM-Schäumform verwendet, die üblicherweise aus zwei Schäumformhälften aufgebaut ist. Die erste Schäumformhälfte bildet dabei die dem Fuß zugewandte Oberseite des Stützkörpers mit einem oberseitigen dreidimensionalen Fußbett aus. Die zweite Schäumformhälfte bildet die dem Schuh zugewandte Unterseite des Stützkörpers aus. Die formgebenden Oberflächen der beiden Formhälften zeigen daher jeweils ein negatives Abbild der Oberseite bzw. der Unterseite des Stützkörpers. Beim RIM-Schäumen werden in die untere Schäumform Hälfte, üblicherweise als die zweite Schäumformhälfte bezeichnet, die Reagenzien - Polyol und Isocyanat -, die den PUR-Schaum bilden in flüssiger Form durch einen Mischkopf eingebracht. Wenn sich die beiden Reagenzien berühren, reagieren sie exotherm unter Ausbildung eines PUR-Schaumkunststoffes. Damit ein definierter Formkörper, hier der Stützkörper, entstehen kann, weist eine RIM-Schäumform im geschlossenen Zustand eine Kavität auf, die durch erste Schäumformhälfte, üblicherweise die obere Schäumformhälfte durch Aufsetzen auf die zweite Schäumformhälfte gebildet wird. Nach dem Zusammensetzen der beiden Schäumformhälften werden diese miteinander verriegelt, sodass der expandierende PUR-Schaumkunststoff die RIM-Schäumform nicht aufdrücken kann. Die eingebrachten Reagenzien können so lange in der Kavität expandieren, bis diese aufgebraucht sind. Nach einer Aushärtezeit kann der so hergestellt Schaumkunststoffkörper, hier der Stützkörper der Schäumform entnommen werden.

Für die Herstellung eines erfindungsgemäßen Schuheinlegesohlenrohlings wird in die erste Schäumformhälfte bei offener Schäumform das PU-Flächenmaterial des Polsterkörpers eingelegt und dort fixiert bzw. daran so befestigt, dass das PU-Flächenmaterial die formgebenden Oberflächen der ersten Schäumformhälfte zumindest teilweise überdeckt und dass das PU-Flächenmaterial während des Schließvorganges der Schäumform an der ersten Schäumformhälfte zumindest anhaften bleibt und nicht herabfällt.

Vor dem Schließen der Schäumform wird, wie oben bereits geschildert, in die zweite Schäumformhälfte, die Ausgangskomponenten, also Polyol und Isocyanat flüssig mittels eines sogenannten Mischkopfes eingebracht. Wenn die beiden Reagenzien in Kontakt kommen, beginnen sie chemisch miteinander unter Ausbildung eines PUR-Schaumkunststoffes zu reagieren und expandieren, wie hinlänglich im Stand der Technik bekannt und oben beschrieben. Daher ist es notwendig nach Einbringen der Reagenzien die Schäumform möglichst rasch zu schließen. Dies erfolgt üblicherweise in einer geführten Linear- und/oder Klappbewegung. Im Anschluss wird die geschlossene Form verriegelt bzw. zugehalten. Diese Verriegelungs- bzw. Zuhaltekraft kann zum endgültigen Festhalten des in die erste Schäumform Hälfte eingelegten PU-Flächenmaterials verwendet werden, falls dieses so groß bemessen ist, dass es über die formgebenden Oberflächen hinausragt. Dadurch wird das PU-Flächenmaterial beispielsweise in der Trennebene der beiden Formhälften eingeklemmt und fixiert.

Da die Reagenzien für den PUR Schaumkunststoff bereits vor dem Schließen der Schäumform in die untere Schäumform Hälfte eingebracht wurden und nun in der Kavität unter Bildung des PUR-Schaumkunststoffes expandieren können, wird nun auch das PU-Flächenmaterial in der geschlossenen Schäumform von dem expandierenden PUR-Schaumkunststoff angeschäumt. Damit bildet sich eine stoffschlüssig Verbindung zwischen dem PU-Flächenmaterial und dem PU-Schaumkunststoff aus. Gleichzeitig wird das PU-Flächenmaterial durch den sich bildenden PU-Schaumkunststoff gegen die formbildenden Oberflächen der ersten Schäumformhälfte gedrückt und verformt sich in Form eines dreidimensionalen Fußbettes, welches durch die formgebenden Oberflächen der ersten Schäumformhälfte gebildet wird. Nach Ende des Aufschäumvorganges, also nach Ende der Reaktion der beiden Ausgangskomponenten, ist der PUR-Schaumkunststoff ausgehärtet und die Schäumform kann geöffnet werden. Nun kann der erfindungsgemäß erzeugte Schaumkunststoff-Schuheinlegesohlenrohling der Schäumform entnommen werden.

Je nach Zuschnitt und Art der Fixierung des PU-Flächenmaterials muss dieser noch auf die Schuhsohlenform zugeschnitten werden, damit er von einem Orthopädiefachmann weiterbearbeitet werden kann. Ein solcher zugeschnittener Schuheinlegesohlenrohling kann auch direkt, wie oben bereits beschrieben, in einen Schuh, beispielsweise im Austausch einer Innensohle, eingelegt werden.

Für das Einlegen des PU-Flächenmaterials bzw. des Polsterkörpers gibt es erfindungsgemäß verschiedene Möglichkeiten. Eine besteht darin, dass eine am Polsterkörper anhaftende und abziehbare Schutzfolie verwendet wird, mit der der Polsterkörper/das PU-Flächenmaterial mit der Schutzfolie zugewandt zu den formgebenden Oberflächen in die erste Schäumformhälfte eingelegt wird. Dabei haftet die Schutzfolie zumindest so leicht an der Innenseite der ersten Schäumformhälfte an, dass sich diese beim Schließen der Schäumform nicht von der ersten Schäumformhälfte löst. Beim Schließen der Schäumform kann die Schutzfolie mit dem daran angebrachten PU-Flächenmaterial dann in der zwischen den beiden Schäumformhälften ausgebildeten Trennebene festgeklemmt werden und hält den Polsterkörper in seiner vorgesehenen orthopädisch wirksamen Position.

Nach dem RIM-Schäumformgang kann die Schutzfolie von dem so erzeugten Schuheinlegesohlenrohling leicht entfernt werden, da diese abziehbar am Polsterkörper angebracht ist. Erfindungsgemäß spielt es keine Rolle, wann die Schutzfolie entfernt wird, jedoch sollte dies zu einem Zeitpunkt geschehen bevor der Träger der Schuheinlegesohle diese in Benutzung nimmt.

Eine andere Möglichkeit besteht darin das PU-Flächenmaterial so großzügig zuzuschneiden, dass das PU Flächenmaterial direkt in der Formtrennebene der beiden Schäumformhälften beim Schließen der Schäumform festgeklemmt wird. Dies ist insbesondere dann bevorzugt, wenn das PU-Flächenmaterial relativ dünn ausgebildet ist und so ein negativer Einfluss auf die Trennebene vermieden werden kann. Gleichzeitig kann das PU-Flächenmaterial die Trennebene abdichten, sodass kein PUR-Schaumkunststoff aus der Kavität austreten kann.

Die zuvor beschriebene Schutzfolie kann in einer weiteren Ausführungsform der Herstellung des erfindungsgemäßen Schuheinlegesohlenrohlings auch ein Deckenmaterial sein, welches am Schuheinlegesohlenrohling verbleibt. Dieses wurde beispielsweise zuvor mit dem PU-Flächenmaterial verklebt.

In einer weiteren Ausführungsform in dem ein Polsterkörper aus PU-Flächenmaterial erfindungsgemäß an einen RIM-Stützkörper aufgebracht werden soll, besteht darin, dass ein Deckenmaterial oder eine Schutzfolie in die erste Schäumformhälfte eingelegt wird, an dem der Polsterkörper anhaftet oder angeheftet wird. Dabei braucht der Polsterkörper nicht die gesamte Fußbett überdecken, sondern kann nur in Teilbereichen an der fertigen Schuheinlage angeordnet sein. Das Deckenmaterial oder die Schutzfolie dient in diesem Ausführungsbeispiel lediglich der Positionierung bzw. Fixierung des Polsterkörpers oder eines orthopädisch wirksamen anderen Bauteils in seiner orthopädisch vorgesehenen Position. Hier wird also der Polsterkörper durch das Deckenmaterial während des Schäumvorganges, also während der Expansionsphase des Schaumkunststoff in seiner orthopädisch vorbestimmten Lage in der RIM-Schäumform gehalten. Genauso wie der zuvor beschriebene Polsterkörper können auch andere orthopädisch wirksame Bauteile, wie beispielsweise Pelotten, Stützkeile, Fersenkeile und ähnliche dem orthopädischen Fachmann bekannte orthopädische Bauteile mittels dem Deckenmaterial bzw. dem PU-Flächenmaterial an der vorbestimmten Position in der fertigen Schuheinlage festgesetzt werden.

In einer weiteren bevorzugten Ausführungsform der Erfindung wird ein Spritzgussteil an den Polsterkörper angespritzt, bevor der Polsterkörper in die Schäumform eingelegt wird. Hierzu wird das PU-Flächenmaterial zunächst in eine Spritzgussform eingebracht, bzw. dort so fixiert, beispielsweise durch Einhängen, dass das Spritzgussteil in einer orthopädisch gewollten und vorbestimmten Position an das PU-Flächenmaterial angespritzt wird und das Spritzgussteil zusammen mit dem PU-Flächenmaterial auf die erste Schäumformhälfte der RIM-Schäumform umsetzbar ist, sodass das Spritzgussteil vom Polsterkörper, also von PU-Flächenmaterial, in der RIM-Schäumform ebenfalls an der orthopädisch vorbestimmten Position gehalten wird.

Bevorzugt wird das an einen Polsterkörper aus PU-Flächenmaterial angespritzte Spritzgussteil an der Unterseite des Schuheinlegesohlenrohling angeordnet, da solche Spritzgussteile meisten aus relativ harten Materialien gefertigt werden, damit diese ein gute Stützwirkung auf den Fuß ausüben können. Damit die Oberseite des erfindungsgemäßen Schuheinlegesohlenrohling dennoch eine weiche und elastische Dämpfungseigenschaft zeigt, ist es bevorzugt, den PUR-Stützkörper über dem Spritzgussteil, also auf der Oberseite, anzuordnen, sodass der Stützkörper als eine Art Polsterkörper für das Spritzgussteil angesehen werden kann.

Erfindungsgemäß bevorzugt wird das am Polsterkörper bzw. am PU-Flächenmaterial angeordnete Spritzgussteil in die zweite Schäumformhälfte eingelegt, deren formgebenden Oberflächen die Unterseite des Stützkörpers formen. Dabei kann das Spritzgussteil den formgebenden Oberflächen zugewandt oder den formgebenden Oberflächen abgewandt in der zweiten Schäumformhälfte angeordnet werden, je nachdem, ob das Spritzgussteil am geformten Schuheinlegesohlenrohling bearbeitbar sein soll oder nicht. Zeigt das Spritzgussteil zur Kavität ist es in dem RIM-geformten Schuheinlegesohlenrohling durch das PU-Flächenmaterial zumindest teilweise überdeckt, da der Polsterkörper aus PU-Flächenmaterial das Spritzgussteil an der gewollten vorbestimmten Position hält und den formgebenden Oberflächen der zweiten Schäumformhälfte während des RIM-Schäumens zugewandt ist. Umgekehrt, wenn das Spritzgussteil den formgebenden Oberflächen der zweiten Schäumformhälfte zugewandt ist, ist das Spritzgussteil nach Entnahme des Schuheinlegesohlenrohlings an der Unterseite des Schuheinlegesohlenrohlings sichtbar und kann, bspw. durch einen Orthopädiefachmann, bearbeitet werden.

Das erfindungsgemäße Verfahren zum Herstellen eines Schuheinlegesohlenrohlings wurde oben anhand der Verwendung von nur einem einzigen PUR-Schaumkunststoff beschrieben, was, wie dem Fachmann bekannt ist, in analoger Weise auch mit zwei oder mehreren PUR-Schaumkunststoffen bevorzugt mit unterschiedlichen Materialhärten erfolgen kann. Die Ausgangsstoffe für die zwei oder mehreren PUR-Schaumkunststoffe können gleichzeitig in ein und derselben Schaumkunststoff-Schäumform erzeugt werden. Hierzu werden an verschiedenen Stellen unterschiedliche Mischungen bzw. unterschiedliche Mengen von Polyol und Isocyanat in die zweite Schäumform gleichzeitig durch mehrere Mischköpfe oder durch einen Mischkopf kurz hintereinander eingebracht, welche dann in der geschlossenen Schäumform zeitparallel expandieren können. Die dabei entstehenden Materialfronten sind, falls keine mechanischen Vliesgrenzen vorgesehen sind, bilden sich abhängig von der Reaktionsgeschwindigkeit der einzelnen entstehenden PUR-Schaumkunststoffe. Somit ist eine Ausbildung einer klaren reproduzierbaren Materialfront nur schwer erreichbar, insbesondere auch deshalb da die PUR-Schaumkunststoffe ineinanderlaufen und sich in Teilbereichen vermischen.

Die obigen Erläuterungen zum erfindungsgemäßen orthopädischen PU-Schuheinlegesohlen und zum erfindungsgemäßen Verfahren zur Herstellung eines solchen orthopädischen Schuheinlegesohlenrohlings werden im Folgenden anhand von Figuren bevorzugte Ausführungsbeispiele näher detailliert. Dabei sollen die weiteren gemachten Erläuterungen den Erfindungsgedanken nicht auf diese Ausführungsbeispiele einschränken. Sie dienen lediglich der Anschaulichkeit. Es zeigen:
- Figur 1: schematisch einen Längsschnitt durch einen orthopädischen Schuheinlegesohlenrohling gemäß dem Stand der Technik;
- Figur 2: schematisch einen Längsschnitt durch einen orthopädischen Schuheinlegesohlenrohling gemäß einem ersten Ausführungsbeispiel der Erfindung;
- Figur 3: schematisch einen Längsschnitt durch einen orthopädischen Schuheinlegesohlenrohling gemäß einem zweiten Ausführungsbeispiel der Erfindung;
- Figur 4: schematisch einen Längsschnitt durch einen orthopädischen Schuheinlegesohlenrohling gemäß einem drittem Ausführungsbeispiel der Erfindung;
- Figur 5: perspektivisch in einer schematischen Darstellung ein viertes Ausführungsbeispiel für einen erfindungsgemäßen, orthopädischen Schuheinlegesohlenrohling;
- Figur 6: perspektivisch in einer schematischen Darstellung ein fünftes Ausführungsbeispiel für einen erfindungsgemäßen, orthopädischen Schuheinlegesohlenrohling;

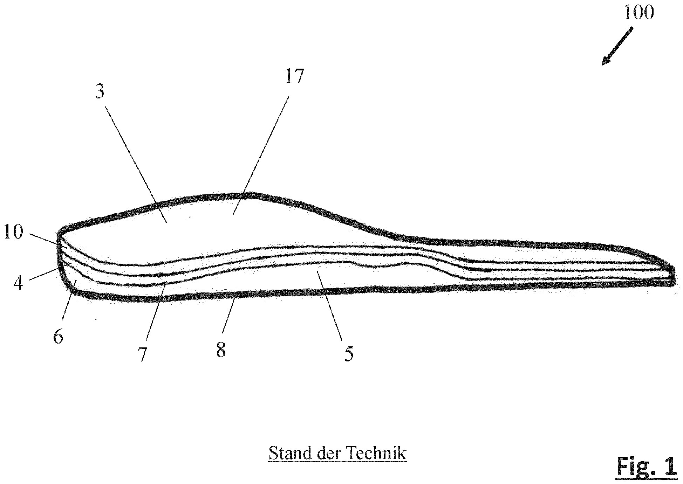

Figur 1 zeigt eine aus dem Stand der Technik bekannte Schuheinlage 100 schematisch in einem Längsschnitt. Die Schuheinlage 100 zeigt ein oberseitiges Fußbett 3, welches auf der Oberseite 7 eines Stützkörpers 6 aus PUR-Schaumkunststoff 5 gebildet wird. Das Fußbett ist mit einem Polsterkörper 10 bezogen, wobei eine Trägerschicht 4 als verbindende, haftvermittelnde Schicht den Polsterkörper 10 auf dem Stützkörper 6 hält. Diese haftermittelnde Schicht 4 erstreckt sich in diesem Fall über die gesamte Fläche der Schuheinlage 100.

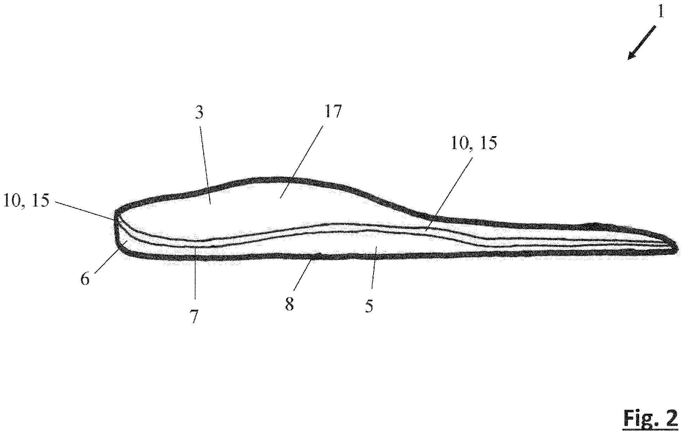

Figur 2 zeigt einen erfindungsgemäßen Schuheinlegesohlen-Rohling 1 ebenfalls in einem schematischen Längsschnitt. Der erfindungsgemäße Schuheinlegesohlenrohling 1 zeigt ebenfalls ein Fußbett 3, welches auf der Oberseite eines PUR-Schaumkunststoff 5 ausgebildeten Stützkörper 6 angeordnet ist. Der Stützkörper 6 des erfindungsgemäßen Schuheinlegesohlenrohlings 1 ist ebenfalls mit einem Polsterkörper 10 bezogen, der jedoch ohne jegliche haftvermittelnde oder verbindende Trägerschicht direkt stoffschlüssig mit dem Stützkörper 6 verbunden ist. Die aus dem Stand der Technik bekannte haftvermittelnde Schicht 4, wie sie in der Figur 1 gezeigt ist, kann erfindungsgemäß entfallen, da das Material des Polsterkörpers 10 sich während des RIM-Schäumens des Stützkörpers 6 stoffschlüssig mit der RIM-Schaumkunststoff 5 verbindet. Somit ist der erfindungsgemäße Schuheinlegesohle-Rohling 1 in seiner einfachsten Ausgestaltung zweilagig, wobei derzeit bekannte Schuheinlegesohlenrohlinge 100 aufgrund des Vorhandenseins einer Trägerschicht 4 mindestens dreilagig ausgeführt werden müssen. Die Vorteile einer 2-lagigen Ausführung eines Schuheinlegesohlenrohling wurden bereits oben im allgemeinen Teil der Erfindungsbeschreibung erläutert.

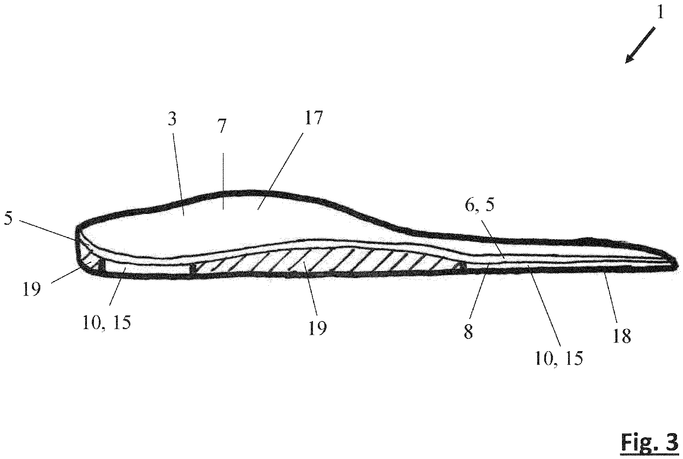

In Figur 3 ist ein Schuheinlegesohlenrohling gemäß der Erfindung in einer zweiten Ausführungsform gezeigt, in der Polsterkörper 10 auf der Unterseite 8 des Stützkörpers 6 angeordnet ist, also die Unterseite 18 des Schuheinlegesohlenrohlings 1 bildet. In diesem Ausführungsbeispiel bildet die Oberseite 7 des Stützkörpers 6 gleichzeitig die Oberseite 17 des Schuheinlegesohlenrohlings 1. Die Oberseite 7 des Stützkörpers 6 kann, wie ein Fachmann ohne weiteres erkennt, mit einem weiteren Deckenmaterial 25 versehen sein, welches aber auch erst nachträglich zu einem individuellen Anpassen des Schuheinlegesohlenrohlings, beispielsweise durch Schleifen oder Fräsen, aufgebracht werden kann. Der in Figur 3 schematisch dargestellte Schuheinlegesohlenrohling 1 zeigt weiterhin ein im Fersenbereich 13 angeordnetes Stützteil 19. Das Stützteil 19 wird bevorzugt im Spritzgussverfahren an den Polsterkörper 10 angespritzt, bevor der Polsterkörper 10 in jene Schäumformhälfte eingelegt wird, die die schuhzugewandte Unterseite 18 des Schuheinlegesohlenrohlings 1 ausbildet. Dabei wird das Spritzgussteil 19 erfindungsgemäß derart an das PU-Flächenmaterial 15 des Polsterkörpers 10 angespritzt, dass es zusammen mit diesen so in die RIM Schäumform eingelegt und fixiert werden kann, dass das Spritzgussteil 19 an der gewollten vorbestimmten Position vom Polsterkörper 6 während des RIM-Schäumens gehalten wird. Wie zuvor bereits beschrieben, kann der Polsterkörper 10 beispielsweise beim Schließen der RIM-Schäumform in der Trennebene der beiden Schäumformhälften festgeklemmt werden, damit weder der Polsterkörper 10 noch das Spritzgussteil 19 während des Expandierens des PUR-Schaumkunststoff in der RIM-Schäumform verrutscht und das Spritzgussteil 19 sicher an der gewollte vorbestimmten orthopädisch wirksamen Position gehalten wird.

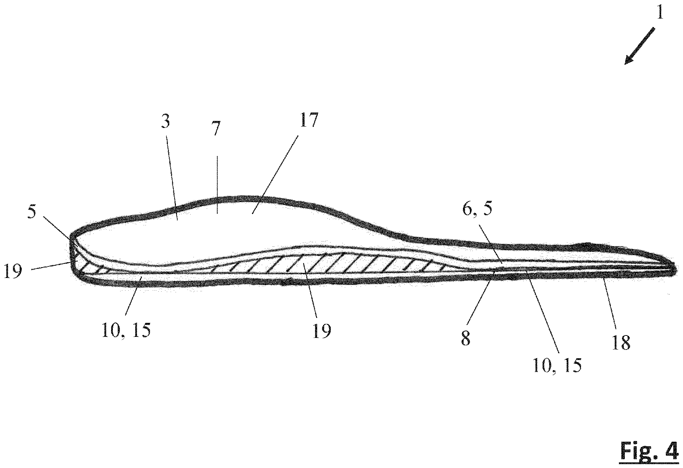

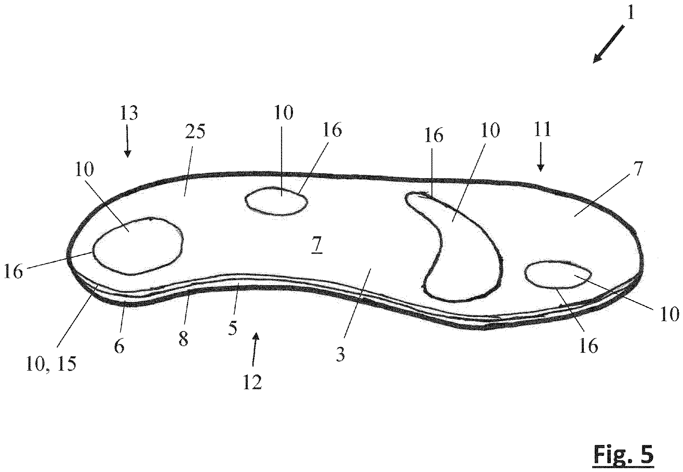

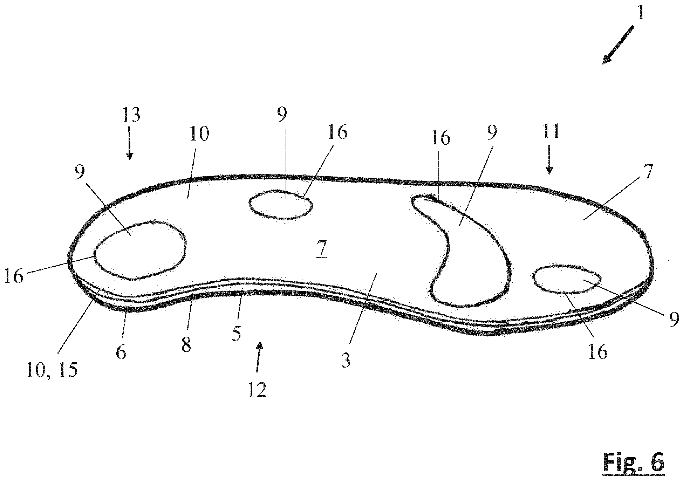

Figur 4 zeigt in Abwandlung zum Ausführungsbeispiel der Figur 3 ein drittes Ausführungsbeispiel eines erfindungsgemäßen Schuheinlegesohlenrohlings 1mit einem innenliegenden Spritzgussteil 19, das an der Unterseite 8 des Stützkörpers 6 angeordnet ist. Das PU-Flächenmaterial 15 des Polsterkörpers 10 bildet in dieser Ausführungsform die Unterseite 18 des Schuheinlegesohlenrohlings 1. Der Stützkörper 6 ist, wie auch im Ausführungsbeispiel der Figur 3, an der Oberseite 17 des Schuheinlegesohlenrohlings 1 angeordnet und kann, wie beispielsweise in den weiteren Ausführungsbeispielen der Figuren 5 und 6 gezeigt, mit einem weiteren Polsterkörper 10 und/oder einem Deckenmaterial 25 versehen werden. Im Unterschied zum Ausführungsbeispiel der Figur 3 wurde in der Ausführungsform gemäß Figur 4 das an das PU-Flächenmaterial 15 des Polsterkörpers 10 angespritzte Spritzgussteil 19 zusammen mit dem Polsterkörper 10 so in die RIM-Schäumform eingelegt, dass das Spritzgussteil 19 während des RIM-Schäumens der Kavität zugewandt war. Der Polsterkörper 10 überdeckte dabei die formgebenden Oberflächen der zweiten RIM-Schäumformhälfte, die die schuhzugewandte Unterseite 18 des Schuheinlegesohlenrohlings 1 ausformen. Somit zeigt die beispielhafte Ausführungsform gemäß Figur 4 ein vollständig vom PU-Flächenmaterial 15 des Polsterkörpers 10 überdecktes Spritzgussteil 19, was jedoch nicht zwingend ist. So ist ebenso vorstellbar, dass das PU-Flächenmaterial Ausnehmungen 16 aufweist, durch die das Spritzgussteil 19 an die Oberfläche tritt und dort sichtbar beispielsweise durch einen Orthopädiefachmann bearbeitbar ist.

Figur 5 zeigt perspektivisch und exemplarisch eine vierte Ausführungsform für einen erfindungsgemäßen Schuheinlegesohlen-Rohling 1 bei dem beispielsweise ein Schuheinlegesohlen-Rohling 1 gemäß Figur 2 mit einer weiteren Bezugsstoff 25 bezogen ist. Im Bezugsstoff 25, welches ebenfalls ein PU-Flächenmaterialsein kann, aber nicht sein muss, sind ein oder mehrere Aussparungen 16 im Zehenbereich 11 im Mittenbereich 12 und im Fersenbereich 13 einer Fußsohle angeordnet. Durch diese Aussparungen 16 kommt der Polsterkörper 10 direkt mit der Fußsohle des Trägers der Schuheinlegesohle in Kontakt. Dabei können die Polsterkörper 10 unterhalb des zusätzlichen Bezugsstoffes 25 miteinander verbunden sein oder separate Polsterkörper 10 sein, die einzeln mit dem Stützkörper 6 verbunden sind. Durch separate Polsterkörper 10 können die orthopädisch geforderten Dämpfungs- und Stützanforderungen in den einzelnen Bereichen individuell angepasst werden. So kann beispielsweise im Bereich der Zehengrundgelenke im Übergang vom Vorderfußbereich 11 zum Mittenbereich 12 weichere Polsterkörper 10 eingesetzt werden als beispielsweise für die Polsterung der Großzehe.

Aus der Figur 6 erkennt der Fachmann, dass eine zur Figur 4 invertierte Anordnung und Festsetzung von Einlegeteilen, insbesondere orthopädisch wirksamen Bauteile 9, wie Pelotten, Fersenkeilen, Längsgewölbestützen, etc., die durch in einem Polsterkörper 10 angeordnete Aussparungen 16 zumindest teilweise sichtbar sind, analog erfolgen kann. Dabei sind auch Ausführungsformen umfasst, bei denen die orthopädisch wirksamen Bauteile 9 vom Polsterkörper 10 vollständig überdeckt sind. Mit dieser Ausführungsform können orthopädisch wirksame Bauteile 9 als Einlegeteile, die mit PUR-Schaumkunststoff nicht stoffschlüssig verbindbar sind, durch den stoffschlüssig mit dem Stützkörper 6 verbindbaren Polsterkörpers 10 aus PU-Flächenmaterial 15 sicher am Schuheinlegesohlenrohling 1 gemäß der Erfindung festgesetzt werden.

Wie zuvor bereits aufgezeigt, können die einzelnen Ausführungsbeispiele der Figuren 1 bis 6 miteinander kombiniert werden, ohne vom Erfindungsgedanken abzuweichen. Erfindungsgemäß sind insbesondere Schuheinlegesohlenrohling herstellbar, die einen oder mehrere Polsterkörper 10 sowohl auf der Oberseite 17 des Schuheinlegesohlenrohlings 1 als auch auf dessen Unterseite 18 zeigen. Dabei kann das PU-Flächenmaterial 15 des einen oder der mehreren Polsterköper 10 oder das der Deckenmaterialien 25, die zusätzlich an der Oberseite 17 und/oder Unterseite 18 des erfindungsgemäßen Schuheinlegesohlenrohlings 1 aufgebracht sind, Ausnehmungen 16 aufweisen, durch die ein Spritzgussteil 19 und/oder das PU-Flächenmaterial 15 des einen oder der mehreren Polsterkörper 10 sichtbar sind. Der Fachmann erkennt hier eine Vielzahl möglicher Kombinationen, die alle durch den Erfindungsgedanken, ein Trägerschicht-freies PU-Flächenmaterial 15 als Polsterkörper 10 zu verwenden, miteinander verbunden sind.

### Bezugszeichenliste

- 1: Orthopädischer Schuheinlegesohlenrohling
- 3: Fußbett
- 4: Trägerschicht
- 5: PUR-Schaumkunststoff
- 6: PUR-Stützkörper
- 7: Oberseite Stützkörper
- 8: Unterseite Stützkörper
- 9: Orthopädisch wirksame Bauteile (Einlegeteile)
- 10: Polsterkörper
- 11: Vorderfußbereich
- 12: Mittelfußbereich
- 13: Fersenbereich
- 15: PU-Flächenmaterial
- 16: Aussparungen
- 17: Oberseite Schuheinlegesohlenrohling
- 18: Unterseite Schuheinlegesohlenrohling
- 19: Spritzgussteil
- 25: Bezugsstoff

- 100: Schuheinlage gemäß dem Stand der Technik

## Patentansprüche

1. Orthopädischer PUR-Schaumkunststoff-Schuheinlegesohlenrohling (1) mit zumindest einem Polsterkörper (10) und einem dreidimensional im RIM-Verfahren geformten, einen Fuß stützenden PUR-Stützkörper (6), der eine schuhseitige Unterseite (8) und eine fußseitige Oberseite (7) aufweist, auf der ein anatomisch geformtes, orthopädisch wirksames Fußbett (3) ausgebildet ist, wobei der zumindest eine Polsterkörper (10) aus einem vorgefertigten, zweidimensionalen PU- Flächenmaterial (15) besteht, das keine Trägerschicht aufweist und das aus einer im Koagulations-, im Extrusions- oder aus einer Polyurethan-Dispersionsmischung hergestellt wurde, und wobei der zumindest eine Polsterkörper (10) durch Anschäumen mit PUR-Schaumkunststoff (5) in der formgebenden RIM-Schäumform während der Expansion des RIM-Schaumkunststoffs zum Erzeugen des PUR-Stützkörpers (6) an dessen Oberseite (7) und/oder an dessen Unterseite (8) stoffschlüssig festgesetzt wurde.

2. Schuheinlegesohlenrohling (1) nach Anspruch 1, bei dem der zumindest eine Polsterkörper (6) die Oberseite (17) des Schuheinlegesohlenrohlings (1) nur teilweise oder vollständig bedeckt, oder der Stützkörper (6) nur in Teilbereichen des Schuheinlegesohlenrohlings (1) angeordnet ist.

3. Schuheinlegesohlenrohling (1) nach Anspruch 1 oder 2, bei dem ein Deckenmaterial (25) auf den PUR-Stützkörper (6) und/oder den zumindest einen Polsterkörper (10) aufgebracht ist, das den Polsterkörper (10) überdeckt oder das Aussparungen (16) aufweist, durch welche der Polsterkörper (10) und/oder der Stützkörper (6) zumindest teilweise sichtbar ist.

4. Schuheinlegesohlenrohling (1) nach einem der vorherigen Ansprüche, bei dem zwei oder mehr Polsterkörper (10) an der Oberseite (7) und/oder Unterseite (8) des PUR-Stützkörpers (6) stoffschlüssig festgesetzt sind.

5. Schuheinlegesohlenrohling (1) nach Anspruch 3 oder 4, bei dem das Deckenmaterial (25) während des RIM-Schäumens des PUR-Stützkörpers (6) stoffschlüssig an dem PUR-Stützkörper (6) und/oder dem Polsterkörper (10) festgesetzt wurde.

6. Schuheinlegesohlenrohling (1) nach einem der vorherigen Ansprüche, bei dem der PUR-Stützkörper (6) aus mehreren PUR-Schaumkunststoffen unterschiedlicher Materialhärten und/oder -Farben hergestellt ist.

7. Schuheinlegesohlenrohling (1) nach einem der vorherigen Ansprüche, der zwei PUR-Stützkörper (6) aufweist, die zumindest teilweise auf verschiedenen Seiten des Polsterkörpers (10) ausgebildet sind, sodass das orthopädisch wirksame Fußbett von einem oder von beiden Stützkörpern (6) zusammen gebildet wird.

8. Schuheinlegesohlenrohling (1) nach einem der vorherigen Ansprüche, bei dem vor dem Anschäumen des Polsterkörpers (10) mit PUR-Schaumkunststoff (5) ein orthopädisch wirksames Spritzgussteil (19) im Spritzgussverfahren an den Polsterkörper (10) angebunden wurde, welches durch den Polsterkörper (10) zumindest während der Expansion des RIM-Schaumkunststoffs zum Erzeugen des PUR-Stützkörpers (6) an einer orthopädisch vorbestimmten Position gehalten wird.

9. Schuheinlegesohlenrohling (1) nach Anspruch 8, bei dem das Spritzgussteil (19) an der Unterseite (8) des Stützkörpers (6) angeordnet ist, wobei das Spritzgussteil (19) sichtbar an der Unterseite (18) des Schuheinlegesohlenrohlings (1) angeordnet oder vom Polsterkörper (10) überdeckt ist.

10. Schuheinlegesohlenrohling (1) nach einem der vorherigen Ansprüche, bei dem der PUR-Stützkörper (6) und/oder der Polsterkörper (10) zur individuellen Anpassung an den Träger einer Schuheinlage schleifbar und/oder thermoformbar ist.

11. Schuheinlegesohlenrohling (1) nach einem der vorherigen Ansprüche, bei dem der Schuheinlegesohlenrohling (1) auf der Seite des Fußbetts (3) und/oder auf der Unterseite (8) des PUR-Stützkörpers (6) nachträglich mit einer oder mehreren Decken (25) bezogen ist.

12. Verfahren zum Herstellen eines PUR-Schaumkunststoff-Schuheinlegesohlenrohlings (1) gemäß dem Anspruch 1 mit einem im RIM- Schäumverfahren geformten PUR-Stützkörper (6), der oberseitig ein drei-dimensionales, orthopädisches Fußbett (3) zeigt, und mit zumindest einem oberseitigen auf dem Fußbett (3) angeordneten Polsterkörper (10) aus einem PU-Flächenmaterial (15), das keine Trägerschicht aufweist und das im Koagulations-, im Extrusions- oder aus einer Polyurethan-Dispersionsmischung hergestellt wurde, wobei das Verfahren die Schritte aufweist:
a) Einlegen und Fixieren des zumindest einen Polsterkörpers (6) aus PU-Flächenmaterial (15) in eine erste Schäumformhälfte einer RIM-Schäumform, die mittels erster formgebender Oberflächen die fußzugewandte Oberseite (7) des PUR-Stützkörpers (6) als dreidimensionales Fußbett (3) formt, oder in eine zweite Schäumformhälfte der RIM-Schäumform, die mittels zweiter formgebender Oberflächen die schuhzugewandte Unterseite (7) des PUR-Stützkörpers (6) formt;
b) Einbringen der den PUR-Schaumkunststoff (5) erzeugenden Reagenzien auf die formgebenden Oberflächen der zweiten Schäumformhälfte;
c) Schließen der RIM-Schäumform unter Anformung des Polsterkörpers (10) an den PUR-Stützkörpers (6) mittels des expandierendes PUR-Schaumkunststoffes;
d) Öffnen der RIM-Schäumform nach Ablauf der Aushärtezeit für den PUR-Schaumkunststoff (5) und Entnahme des Schuheinlegesohlenrohlings (1);

13. Verfahren nach Anspruch 12, bei dem der Polsterkörper (10) anhaftend an einer abziehbaren Schutzfolie in die erste Schäumformhälfte einer RIM-Schäumform derart einlegt wird, dass die Schutzfolie den ersten formgebenden Oberflächen RIM-Schäumform zugewandt ist, wobei die Schutzfolie nach der Entnahme des Schuheinlegesohlenrohlings (1) auf dem Polsterkörper (10) verbleiben kann oder von diesem rückstandsfrei entfernbar ist.

14. Verfahren nach Anspruch 12, bei dem der Polsterkörper (10) anhaftend an einer abziehbaren Schutzfolie in die erste Schäumformhälfte einer RIM-Schäumform derart einlegt wird, dass die Schutzfolie den ersten formgebenden Oberflächen der RIM-Schäumform zugewandt ist, wobei die Schutzfolie über die formgebenden Oberflächen der RIM-Schäumform hinausragt und am Rand der RIM-Schäumform vor oder während des Schließens der RIM-Schäumform in dessen Trennebene fixiert wird, um den Polsterkörper (10) während des RIM-Schäumens gegen Verrutschen zu sichern, wobei der Schuheinlegesohlenrohling (1) nach der Entnahme aus der RIM-Schäumform in eine Schuhsohlenform zugeschnitten bzw. gestanzt wird.

15. Verfahren nach einem der Ansprüche 13 oder 14, bei dem die Schutzfolie ein Schuhsohlen-Deckenmaterial (25) für den Schuheinlegesohlenrohling (1) darstellt und Ausnehmungen aufweisen kann, durch die Teile des Polsterkörpers (10) und/oder des Stützkörpers (6) direkt mit den formgebenden Oberflächen der RIM-Schäumform in Kontakt kommen.

16. Verfahren nach einem der Ansprüche 12 bis 15, bei dem vor dem Schießen der RIM-Schäumform orthopädische wirksame Bauteile in die erste oder zweite Schäumformhälfte verrutschsicher eingelegt werden oder vor Schritt a) ein Spritzgussteil an den Polsterkörper (10) angespritzt wird, derart, dass der Polsterkörper (10) das Spritzgussteil (19) zumindest während der Schritte b) und c) in einer orthopädisch vorbestimmten Position hält und das Spritzgussteil (19) nach Schritt d) an der Unterseite (8) des Stützkörpers (6) oder an der Unterseite (18) des Schuheinlegesohlenrohlings (1) angeordnet ist.

## Claims

1. Orthopedic PUR foam plastic shoe insole blank (1) having at least one cushioning body (10) and a PUR supporting body (6) that is shaped three-dimensionally in a RIM process, supports a foot, and has a shoe-side underside (8) and a foot-side upper side (7) on which an anatomically shaped , orthopedically functional footbed (3) is formed, wherein the at least one cushioning body (10) consists of a prefabricated, two-dimensional PU sheet material (15) that has no carrier layer and that was produced by coagulation, extrusion or from a polyurethane dispersion mixture, and wherein the at least one cushioning body (10) has been fixed in a materially integral manner by foaming with PUR foam plastic (5) during the expansion of the RIM foam plastic in the shaping RIM foaming mold at the upper side (7) and/or at the underside (8) of the PUR supporting body (6) .

2. Shoe insole blank (1) according to claim 1, in which the at least one cushioning body (10) only partially covers the upper side (17) of the shoe insole blank (1) or completely covers it, or the supporting body (6) is arranged only in partial areas of the shoe insole blank (1).

3. Shoe insole blank (1) according to claim 1 or 2, in which a covering material (25) is applied to the PUR supporting body (6) and/or the at least one cushioning body (10) , which covers the cushioning body (10) or which has cutouts (16) through which the cushioning body (10) and/or the supporting body (6) is at least partially visible.

4. Shoe insole blank (1) according to one of the previous claims, in which two or more cushioning bodies (10) are fixed in a materially integral manner to the top side (7) and/or underside (8) of the PUR supporting body (6).

5. Shoe insole blank (1) according to claim 3 or 4, in which the covering material (25) has been fixed to the polyurethane supporting body (6) and/or the cushioning body (10) in a materially integral manner during the RIM foaming of the polyurethane supporting body (6).

6. Shoe insole blank (1) according to one of the previous claims, in which the PUR supporting body (6) is made of several PUR foams of different material hardnesses and/or colors.

7. Shoe insole blank (1) according to one of the previous claims, which has two PUR supporting bodies (6) that are formed at least partially on different sides of the cushioning body (10), so that the orthopedically functional footbed is formed together by one or both supporting bodies (6).

8. Shoe insole blank (1) according to one of the previous claims, in which, before the cushioning body (10) is foamed with PUR foam plastic (5), an orthopedically functional injection-molded part (19) is bonded to the cushioning body (10) by means of an injection molding process to the cushioning body (10), which is held by the cushioning body (10) at an orthopedically predetermined position at least during the expansion of the RIM foam plastic for the purpose of producing the PUR supporting body (6).

9. A shoe insole blank (1) according to claim 8, in which the injection-moulded part (19) is arranged on the underside (8) of the supporting body (6), wherein the injection-moulded part (19) is arranged visibly on the underside (18) of the shoe insole blank (1) or is covered by the cushioning body (10).

10. Shoe insole blank (1) according to one of the previous claims, in which the PUR supporting body (6) and/or the cushioning body (10) can be ground and/or thermoformed for individual adaptation to the wearer of a shoe insole.

11. Shoe insole blank (1) according to one of the previous claims, in which the shoe insole blank (1) is subsequently covered with one or more covers (25) on the side of the footbed (3) and/or on the underside (8) of the PUR supporting body (6).

12. A method for manufacturing a PUR foam plastic shoe insole blank (1) according to claim 1, with a PUR supporting body (6) shaped in the RIM foaming process, which has a three-dimensional orthopedic footbed (3) on the upper side, and with at least one cushioning body (10) arranged on the upper side of the footbed (3), made of a PU sheet material (15) that has no carrier layer and that has been produced by coagulation, extrusion or from a polyurethane dispersion mixture, the process comprising the steps of:
a) inserting and fixing at least one cushioning body (6) made of PU sheet material (15) in a first foaming mold half of a RIM foaming mold, which by means of first shape-giving surfaces forms the foot-facing upper side (7) of the PUR supporting body (6) as a three-dimensional footbed (3), or into a second foaming mold half of the RIM foaming mold, which forms the underside (7) of the PUR supporting body (6) facing the shoe by means of second shape-giving surfaces;
b) applying the reagents that produce the PUR foam plastic (5) to the shape-giving surfaces of the second half of the foaming mold;
c) Closing the RIM foaming mold while molding the cushioning body (10) to the PUR supporting body (6) by means of the expanding PUR foam plastic;
d) Opening the RIM foaming mold after the hardening time for the PUR foam plastic has elapsed (5) and removing the shoe insole blank (1);

13. A process according to claim 12, in which the cushioning body (10) is inserted, adhering to a peelable protective film, into the first foaming mold half of a RIM foaming mold in such a way that the protective film faces the first shape-giving surfaces of the RIM foaming mold, wherein the protective film can remain on the cushioning body (10) after removal of the shoe insole blank (1) or can be removed from the latter without leaving any residue.

14. A process according to claim 12, in which the cushioning body (10) is inserted, adhering to a peelable protective film, into the first foaming mold half of a RIM foaming mold in such a way that the protective film faces the first shape-giving surfaces of the RIM foaming mold, the protective film projecting beyond the shape-giving surfaces of the RIM foaming mold and being fixed to the edge of the RIM foaming mold in its parting plane before or during the closing of the RIM foaming mold in order to secure the cushioning body (10) against shifting during the RIM foaming, wherein the shoe insole blank (1) is cut or punched into a shoe sole form after removal from the RIM foaming mold.

15. A method according to one of claims 13 or 14, in which the protective film is a shoe sole covering material (25) for the shoe insole blank (1) and may have recesses through which parts of the cushioning body (10) and/or the supporting body (6) come into direct contact with the shape-giving surfaces of the RIM foaming mold.

16. A method according to one of claims 12 to 15, in which, before closing the RIM foaming mold, orthopedically functional components are inserted into the first or second foaming mold half in a slip-proof manner or, before step a), an injection-molded part is injection-molded onto the cushioning body (10) in such a way that the cushioning body (10) holds the injection-moulded part (19) in an orthopaedically predetermined position at least during steps b) and c), and the injection-moulded part (19) is arranged on the underside (8) of the supporting body (6) or on the underside (18) of the shoe insole blank (1) after step d).

## Revendications

1. Ébauche de semelle intérieure orthopédique en mousse de plastique PUR (1) dotée d'au moins un corps de rembourrage (10) et d'un corps de soutien en PUR (6) façonné en trois dimensions selon le procédé RIM et supportant un pied, ledit corps de soutien comportant une face inférieure côté chaussure (8) et une face supérieure côté pied (7) sur laquelle est formée une assise plantaire (3) de forme anatomique à action orthopédique, dans laquelle l'au moins un corps de rembourrage (10) est composé d'un matériau de surface en PU (15) bidimensionnel fabriqué en amont avance, qui ne présente aucune couche de support et qui a été produit par coagulation, par extrusion ou à partir d'un mélange de dispersions de polyuréthane et dans laquelle l'au moins un corps de rembourrage (10) a été fixé par liaison de matière à la face supérieure (7) et/ou à la face inférieure (8) du corps de soutien en PUR (6) par moulage avec de la mousse de plastique PUR (5) dans le moule de moussage RIM servant au moulage pendant l'expansion de la mousse de plastique RIM pour former le corps de soutien en PUR (6).

2. Ébauche de semelle intérieure (1) selon la revendication 1, dans laquelle l'au moins un corps de rembourrage (10) ne recouvre que partiellement ou recouvre entièrement la face supérieure (17) de l'ébauche de semelle intérieure (1) ou dans laquelle le corps de soutien (6) n'est disposé que dans des zones partielles de l'ébauche de semelle intérieure (1).

3. Ébauche de semelle intérieure (1) selon la revendication 1 ou 2, dans laquelle un matériau de revêtement (25) est appliqué sur le corps de soutien en PUR (6) et/ou sur l'au moins un corps de rembourrage (10), qui recouvre le corps de rembourrage (10) ou qui présente des évidements (16) à travers lesquels le corps de rembourrage (10) et/ou le corps de soutien (6) est visible au moins partiellement.

4. Ébauche de semelle intérieure (1) selon l'une des revendications précédentes, dans laquelle deux ou plusieurs corps de rembourrage (10) sont fixés par liaison de matière à la face supérieure (7) et/ou la face inférieure (8) du corps de soutien en PUR (6).

5. Ébauche de semelle intérieure (1) selon la revendication 3 ou 4, dans laquelle le matériau de revêtement (25) a été fixé par liaison de matière au corps de soutien en PUR (6) et/ou au corps de rembourrage (10) pendant le moussage RIM du corps de soutien en PUR (6).

6. Ébauche de semelle intérieure (1) selon l'une des revendications précédentes, dans laquelle le corps de soutien en PUR (6) est fabriqué à partir de plusieurs mousses de plastique de duretés et/ou de couleurs de matériau différentes.

7. Ébauche de semelle intérieure (1) selon l'une des revendications précédentes, qui présente deux corps de soutien en PUR (6) conçus, au moins partiellement sur différents côtés du corps de rembourrage (10), de telle sorte que l'assise plantaire à action orthopédique est constituée d'un ou des deux corps de soutien (6) ensemble.

8. Ébauche de semelle intérieure (1) selon l'une des revendications précédentes, dans laquelle, avant le moulage du corps de rembourrage (10) avec de la mousse de plastique PUR (5), une pièce moulée par injection (19) à action orthopédique est reliée au corps de rembourrage (10) lors du procédé de moulage par injection, ladite pièce étant maintenue par le corps de rembourrage (10) dans une position prédéterminée du point de vue orthopédique au moins pendant l'expansion de la mousse de plastique par procédé RIM pour former le corps de soutien en PUR (6).

9. Ébauche de semelle intérieure (1) selon la revendication 8, dans laquelle la pièce moulée par injection (19) est disposée sur la face inférieure du corps de soutien (6), la pièce moulée par injection étant placée de manière visible sur la face inférieure (18) de l'ébauche de semelle intérieure (1) ou étant recouverte par le corps de rembourrage (10).

10. Ébauche de semelle intérieure (1) selon l'une des revendications précédentes, dans laquelle le corps de soutien en PUR (6) et/ou le corps de rembourrage (10) peut être rectifié et/ou thermoformé afin de s'adapter individuellement au porteur d'une semelle intérieure.

11. Ébauche de semelle intérieure (1) selon l'une des revendications précédentes, dans laquelle l'ébauche de semelle intérieure (1) est recouverte ultérieurement d'un ou de plusieurs revêtements (25) du côté de l'assise plantaire (3) et/ou sur la face inférieure (8) de l'élément de soutien en PUR (6).

12. Procédé de fabrication d'une ébauche de semelle intérieure en mousse de plastique PUR (1) selon la revendication 1, comportant un corps de soutien en PUR (6) moulé par procédé de moussage RIM, qui présente sur sa face supérieure une assise plantaire (3) tridimensionnelle orthopédique, et au moins un corps de rembourrage (10) disposé sur la face supérieure de l'assise plantaire (3) et constitué d'un matériau de surface en PU (15) qui ne présente aucune couche de support et qui a été fabriqué par coagulation, par extrusion ou à partir d'un mélange de dispersions de polyuréthane, ledit procédé comprenant les étapes suivantes :
a) Insertion et fixation de l'au moins un corps de rembourrage (6) en matériau de surface PU (15) dans une première moitié du moule de moussage RIM qui façonne, au moyen de premières surfaces de moulage, la face supérieure (7), tournée vers le pied, du corps de soutien en PUR (6) sous la forme d'une semelle orthopédique tridimensionnelle (3), ou dans une seconde moitié du moule de moussage RIM qui façonne, au moyen de secondes surfaces de moulage, la face inférieure (7), tournée vers la chaussure, du corps de soutien en PUR (6) ;
b) Introduction des réactifs produisant la mousse de plastique PUR (5) sur les surfaces de moulage de la deuxième moitié du moule de moussage ;
c) Fermeture du moule de moussage RIM par modelage du corps de rembourrage (10) sur le corps de soutien en PUR (6) au moyen de la mousse de plastique PUR expansive ;
e) Ouverture du moule de moussage RIM au terme du temps de durcissement de la mousse de plastique PUR (5) et retrait de l'ébauche de semelle intérieure (1).

13. Procédé selon la revendication 12, dans lequel le corps de rembourrage (10), adhérant à un film de protection amovible, est inséré dans la première moitié d'un moule de moussage RIM de telle sorte que le film de protection est tourné vers les premières surfaces de moulage du moule de moussage RIM, ledit film de protection pouvant rester sur le corps de rembourrage (10) après le retrait de l'ébauche de semelle intérieure de chaussure (1) ou pouvant être retiré de celui-ci sans laisser de résidus.

14. Procédé selon la revendication 12, dans lequel le corps de rembourrage (10), adhérant à un film de protection amovible, est inséré dans la première moitié d'un moule de moussage RIM de telle sorte que le film de protection est tourné vers les premières surfaces de moulage du moule de moussage RIM, le film de protection dépassant des surfaces de moulage du moule de moussage RIM et étant fixé sur le bord du moule de moussage RIM avant ou pendant la fermeture du moule de moussage RIM dans son plan de joint, afin d'empêcher le corps de rembourrage (10) de glisser pendant le moussage RIM, l'ébauche de semelle intérieure (1) étant taillée sur mesure ou découpée en forme de semelle intérieure de chaussure après avoir été retirée du moule de moussage RIM.

15. Procédé selon l'une des revendications 13 ou 14, dans lequel le film de protection constitue un matériau de revêtement (25) pour l'ébauche de semelle intérieure (1) et peut présenter des évidements à travers lesquels des parties du corps de rembourrage (10) et/ou du corps de soutien (6) entrent directement en contact avec les surfaces de moulage du moule de moussage RIM.

16. Procédé selon l'une des revendications 12 à 15, dans lequel, avant la fermeture du moule de moussage RIM, des composants à action orthopédique sont insérés dans la première ou la deuxième moitié du moule de moussage sans risque de glissement ou, avant l'étape a), une pièce moulée par injection est injectée sur le corps de rembourrage (10), de telle sorte que le corps de rembourrage (10) maintient la pièce moulée par injection (19) dans une position prédéterminée du point de vue orthopédique au moins pendant les étapes b) et c) et que la pièce moulée par injection (19) est disposée après l'étape d) sur la face inférieure (8) du corps de soutien (6) ou sur la face inférieure (18) de l'ébauche de semelle intérieure (1).
